# EUROPÄISCHE PATENTSCHRIFT

(11) **EP 2 689 663 B1**
(45) Veröffentlichungstag und Bekanntmachung des Hinweises auf die Patenterteilung: **14.02.2018**
(21) Anmeldenummer: 13176517.4
(22) Anmeldetag: 15.07.2013
(51) Int. Cl.: A21C 5/04, A21C 7/00

(54) **Portionier- und Wirkeinrichtung mit auswechselbarem Portioniersegment**
Portioning and rounding device with exchangeable portioning segment
Dispositif de portionnement et de travail avec segment de positionnement interchangeable

(30) Priorität: 27.07.2012 DE 102012106861
(43) Veröffentlichungstag der Anmeldung: 29.01.2014
(73) Patentinhaber: Fortuna Maschinenbau Holding AG, 96231 Bad Staffelstein (DE)
(72) Erfinder: Schmudermayer, Herbert, 3701 Grossweikersdorf (AT)
(74) Vertreter: Schröer, Gernot H.

(56) Entgegenhaltungen:
- WO-A1-2011/128351
- DE-A1-102006 018 626

## Beschreibung

Die vorliegende Erfindung betrifft eine Portionier- und Wirkeinrichtung zum Herstellen von Teigteilchen, mit einem trommelförmigen Teigteilkammerträger, wobei an einem Außenumfangsbereich des trommelförmigen Teigteilkammerträgers wenigstens ein Portioniersegment auswechselbar befestigbar ist, wobei das Portioniersegment wenigstens eine, vorzugsweise mehrere Messkammern mit einem darin hin- und her bewegliche Messkolben aufweist.

Derartige Portionier- und Wirkeinrichtungen sind bekannt und dienen üblicherweise zum Portionieren von Teig und zur Herstellung von einzelnen Teigteilchen oder Teiglingen.

Aus dem Dokument WO 2011/128351 A1 ist eine Vorrichtung zum Portionieren und Wirken von Teig bekannt, mit einer drehbaren Kammertrommel, die an ihren Umfangsabschnitten mit Aufnahmekammern für die zu wirkenden Teigportionen versehen ist und wobei zumindest ein Umfangsabschnitt der Kammertrommel zusammen mit dem in der Aufnahmekammer befindlichen Verwiegestempel in axialer Richtung abziehbar und aufsteckbar ausgeführt ist. Unvorteilhaft bei dieser vorgeschlagenen Lösung ist jedoch, dass für einen Ausbau in axialer Richtung seitlich von der Kammertrommel ausreichend Raum vorgesehen sein muss, um den Umfangsabschnitt zu entnehmen. Ferner ist keine antriebsmäßige Kopplung für die Radialbewegung der Kolben nach innen offenbart.

Das Dokument DE 10 2006 018 626 A1 offenbart eine Portionier- und Wirkeinrichtung zum Herstellen von Teigteilchen gemäß dem Oberbegriff der ersten Anspruchs und beschreibt eine Portioniereinheit als Teileinheit einer Teigteil-Wirkmaschine mit einer Teiltrommel, in der wenigstens ein radial angeordneter Teilzylinder zur Mantelfläche der Trommel hin offen angeordnet ist, in dem sich ein Teilkolben radial beweglich befindet, wobei alle axial auf einer Mantellinie liegenden Teilzylinder der Teiltrommel zu einer Zylinderleiste zusammengefasst sind und die Zylinderleisten in radialer Richtung aus der Teiltrommel entnehmbar sind. Als Vorteile der in diesem Dokument dargelegten Lösung werden genannt, dass bei einer Reinigung oder Reparatur nur wenige Zylinderleisten anstelle von vielen einzelnen Teilzylindern aus- und eingebaut werden müssen, sowie dass bei einer radialen Entnahme der Zylinderleisten der für den Ausbau benötigte Platz reduziert werden kann. Ein in radialer Richtung entnehmbarer Teilzylinder erfordert beim Einbau einiges an Präzision, da der Teilzylinder einer bestimmten Position angesetzt und eingeschoben werden muss. Bei diesem Dokument ist kein Antrieb der Teilzylinder in radialer Richtung offenbart.

Ferner beschreibt das Dokument DE 24 38 316 C2 eine Maschine zum Teilen und Wirken von Teigstücken, mit einem Gestell, in dem eine Trommel mit mindestens drei um ihren Umfang gleichmäßig verteilten Messkammerreihen auf einer Trommelachse drehbar gelagert ist. Eine Wirkeinrichtung mit einem Wirkwerkzeug ist einer der um den Umfang der Trommel verteilten Messkammerreihen zugeordnet. In jeder Messkammer ist ein mit einem Leitglied verbundener Messkolben hin- und her verschiebbar gelagert und die Leitglieder sind in einer außerhalb der Trommel angeordneten Bahn geführt.

Ausgehend von diesem Stand der Technik ist es eine Aufgabe der vorliegenden Erfindung, eine Portionier- und Wirkeinrichtung der vorgenannten Art zu schaffen, bei der die Montage vereinfacht und erleichtert ist und die eine zuverlässige und betriebsichere Verriegelung aufweist.

Zur Lösung dieser Aufgabe schafft die vorliegende Erfindung eine Portionier und Wirkeinrichtung der vorgenannten Art, die dadurch gekennzeichnet ist, dass das Portioniersegment in eine Zwischeneinbauposition an dem Teigteilkammerträger bringbar ist und aus der Zwischeneinbauposition in eine Verriegelungsposition an dem Teigteilkammerträger bringbar ist, wobei die Portionier- und Wirkeinrichtung eine Antriebseinrichtung für das Portioniersegment aufweist, durch welche der wenigstens eine Messkolben zwangsgeführt in radialer Richtung nach außen und innen antreibbar ist, wobei das Portioniersegment durch die Verschiebung des Portioniersegments aus der Zwischeneinbauposition in die Verriegelungsposition an die Antriebseinrichtung betriebsbereit ankoppelt.

Bei einer derartig ausgebildeten Portionier- und Wirkeinrichtung ist die Herstellung der Verbindung des Portioniersegments mit der Antriebseinrichtung erleichtert. Das Portioniersegment kann erst in eine Zwischeneinbauposition gebracht werden, aus der heraus es weiter in eine Verriegelungsposition geschoben werden kann. So kann das Portioniersegment in der Zwischeneinbauposition an dem Teigteilkammerträger vorpositioniert werden, was die Ankopplung an der Antriebseinrichtung erleichtert. Die Ankopplung kann in einfacher Weise durch die Verschiebung in die Verriegelungsposition erreicht werden.

In einer Ausgestaltung der Erfindung ist das Portioniersegment durch eine Bewegung in radialer Richtung in eine Zwischeneinbauposition an dem Teigteilkammerträger bringbar und aus der Zwischeneinbauposition durch eine Bewegung in axialer Richtung in eine Verriegelungsposition an dem Teigteilkammerträger verschiebbar.

So kann das Portioniersegment in radialer Richtung von außen in eine Zwischeneinbauposition gebracht werden, aus der heraus es weiter in eine Verriegelungsposition geschoben werden kann. So ist vorteilhaft eine Art Bajonettverschluss gebildet, mittels dem das Portioniersegment einfach und sicher an dem Teigteilkammerträger festgelegt werden kann.

Das Portioniersegment weist wenigstens eine Messkammer (oder: Portionierkammer) mit einem darin hin- und her bewegbaren Messkolben (oder: Portionierkolben) auf, wobei der Messkolben durch die Antriebseinrichtung zwangsgeführt antreibbar ist.

Durch eine solche Ausführung der Erfindung kann sich der Messkolben zwangsangetrieben innerhalb der Messkammer vor und zurück bewegen. Die portionierten Teiglinge können so in der Messkammer positioniert werden, dass sie mit einer an einer definierten Position eingreifenden Wirkvorrichtung, bspw. einer Wirkplatte gewirkt werden können.

In einer weiteren Ausbildung der Erfindung weist der Teigteilkammerträger eine durch die Antriebseinrichtung bewegbare Traverse auf und das Portioniersegment weist eine Messkolbenleiste auf, an der wenigstens ein, vorzugsweise alle, Messkolben des Portioniersegments festgelegt ist, wobei die Messkolbenleiste in der Verriegelungsposition an der Traverse festgelegt ist und bei einer Bewegung der Traverse mit dieser mitbewegt wird.

Die Messkolbenleiste kann so in einfacher Weise an den Antrieb für die Messkolben gekoppelt werden. Der Antrieb für die Messkolben wird beim Einbau des Portioniersegments automatisch angekoppelt.

In einer weiteren vorteilhaften Ausgestaltung der Erfindung weist das Portioniersegment wenigstens ein, insbesondere an der Messkolbenleiste befestigtes, Arretierelement aufweist, mit einem vorzugsweise wenigstens abschnittsweise u-förmigen Profil, welches bei einem Verbringen des Portioniersegments in die Zwischeneinbauposition in Umgriff mit einer Traverse des Teigteilkammerträgers kommt.

Das Arretierelement umgreift in Zwischeneinbauposition und auch in Verriegelungsposition die Traverse. Das Portioniersegment ist damit in vorteilhafter Weise an der Traverse festgelegt. Ein seitliches Spiel zwischen Traverse und Portioniersegment ist minimiert und die Übertragung der Bewegung der Traverse auf das Portioniersegment ist optimiert. Die Montierbarkeit des Portioniersegments ist verbessert, wobei das Arretierelement zusätzlich einfach zu reinigen ist.

In einer weiteren vorteilhaften Weiterbildung der Erfindung weist das Arretierelement zumindest abschnittsweise einen trichterartigen Querschnitt auf, der von einer ersten Lasche und einer zweiten Lasche geformt ist, wobei die erste und zweite Lasche jeweils als von einem Grundkörper des Arretierelements abgebogene Laschen ausgebildet sind und/oder wobei das Arretierelement Arretieraufnahmen aufweist, die vorzugsweise langlochartig ausgebildet sind und wobei an der Traverse angeordnete Traversenbolzen bei einer Bewegung des Portioniersegments aus der Zwischeneinbauposition in die Verriegelungposition mit den Arretieraufnahmen in Eingriff gebracht werden und das Arretierelement an der Traverse festlegen.

Durch die Laschen können Montage- oder Einbaufehler vermieden werden. Das Portioniersegment kann beispielsweise nicht falsch herum verriegelt werden. Zudem kann das Arretierelement mittels an der Traverse angebrachter Bolzen an dieser festgelegt werden, indem das Arretierelement selbstpositionierend an den Bolzen entlang und in die Verriegelungsposition hinein gleitet.

In einer weiteren Ausgestaltung der Erfindung ist eine Wirkvorrichtung vorgesehen, die in Wirkstellung, vorzugsweise in Zwölf-Uhr-Stellung des Teigteilkammerträgers unmittelbar benachbart zu dem montierten Portioniersegment anordenbar ist, wobei der oder die Messkolben in Wirkstellung so positioniert sind, dass der oder die in der oder den Messkammern befindlichen Teiglinge so positioniert sind, dass sie von der Wirkvorrichtung gewirkt werden können.

Auf diese Weise ist ein sehr effizienter Aufbau der Portionier- und Wirkeinrichtung geschaffen. Das Portioniersegment kann so an dem Teigteilkammerträger befestigt und eingestellt werden, dass der Positionieraufwand für die Wirkvorrichtung minimiert wird.

In einer weiteren Ausgestaltung der Erfindung sind an dem Teigteilkammerträger und dem Portioniersegment Befestigungselemente so angeordnet und ausgebildet, dass an dem Portioniersegment angeordnete Befestigungselemente mit an dem Teigteilkammerträger angeordneten Befestigungselementen so zusammenwirken können, dass das Portioniersegment an dem Teigteilkammerträger in der Zwischeneinbauposition positionierbar ist und aus der Zwischeneinbauposition in die Verriegelungsposition verschiebbar ist.

Auf diese Weise kann ein Monteur das Portioniersegment an dem Teigteilkammerträger vormontieren, ohne das Portioniersegment in einem Arbeitschritt in eine exakte Verriegelungsposition bringen zu müssen. Da die Zwischeneinbauposition weniger eindeutig sein kann als die Verriegelungsposition, welche genau definiert sein muss, ist dies eine wesentliche Erleichterung.

In einer weiteren Ausbildung der Erfindung umfasst der Teigteilkammerträger wenigstens ein als federndes Druckstück ausgebildetes Befestigungselement, welches so positioniert ist, dass es eine Druckkraft im Wesentlichen senkrecht zur axialen Richtung ausüben kann und wobei das Portioniersegment wenigstens eine Befestigungsschulter umfasst, die so an dem Portioniersegment angeordnet ist, dass die Befestigungsschulter in der Zwischeneinbauposition des Portioniersegments so zu dem federnden Druckstück positioniert ist, dass keine Druckkraft von dem federnden Druckstück auf die Befestigungsschulter übertragen wird und/oder wobei bei der Bewegung aus der Zwischeneinbauposition in die Verriegelungsposition eine Druckkraft von dem federnden Druckstück auf die Befestigungsschulter übertragen wird und/oder wobei die Befestigungsschulter in der Verriegelungsposition des Portioniersegments so zu dem federnden Druckstück positioniert ist, dass eine Druckkraft von dem federnden Druckstück auf die Befestigungsschulter übertragen wird.

In einer derartigen Ausbildung kann das Portioniersegment beispielsweise in der Verriegelungsposition durch die Druckkraft klemmend gehalten sein oder alternativ, beispielsweise mit dem Vorsehen einer zusätzlichen Aussparung in der Verriegelungsposition eine Art zusätzlichen Formschluss zur Verfügung stellen. Ferner ist das Einführen des Portioniersegments ebenfalls erleichtert, da die Einführöffnungen an dem Portioniersegment vorgesehen sind und die federnden Druckstücke einfach in diese eingeführt werden können.

Alternativ oder zusätzlich kann eine Ausgestaltung vorgesehen sein, bei der Befestigungselemente wenigstens einen Bolzen und wenigstens eine dem Bolzen zugeordnete zweite Aufnahmeöffnung aufweisen, wobei die zweite Aufnahmeöffnung eine schlüssellochförmige Aufnahmeöffnung ist und der Bolzen in der Zwischeneinbauposition des Portioniersegments in einem verbreiterten Bereich der schlüssellochförmigen Aufnahmeöffnung angeordnet ist und der Bolzen in einer Verriegelungsposition des Portioniersegments an dem Teigteilkammerträger in einem verengten Bereich der schlüssellochförmigen Aufnahmeöffnung angeordnet ist.

Die Zusammenwirkung von Bolzen und schlüssellochförmiger Aufnahmeöffnung ermöglicht ein vorteilhaftes Bewegen des Portioniersegments von der Zwischeneinbauposition in die Verriegelungsposition. Durch die Schlüssellochform kann der Bolzen von einem verbreiterten in einen verengten Bereich der Aufnahmeöffnung gleiten, so dass das Portioniersegment von einer weniger eindeutig definierten Zwischeneinbauposition in eine sehr eindeutig definierte Verriegelungsposition überführt wird. Darüber hinaus kann der Bolzen in dem verengten Bereich klemmen, so dass bereits dadurch das Portioniersegment kraftschlüssig in der Verriegelungsposition festgelegt ist.

In einer weiteren Ausgestaltung der Erfindung ist die Befestigungsschulter von dem Befestigungsabschnitt beabstandet und bildet mit diesem eine Aussparung, in welcher das federnde Druckstück aufgenommen ist, wenn sich das Portioniersegment in einer Verriegelungsposition befindet.

Auf diese Weise ist ein Formschluss in radialer Richtung gebildet, wenn sich das Portioniersegment in Verriegelungsposition befindet. Zudem ist eine solche Aussparung in ausgebautem Zustand gut manuell erreichbar und damit einfach zu reinigen.

Bei einer weiteren Ausbildung der Erfindung ist wenigstens eine Verriegelungseinrichtung vorgesehen, durch die das Portioniersegment in der Verriegelungsposition an dem Teigteilkammerträger verriegelt wird, insbesondere so, dass Grundkörper und Außenumfangskörper an dem Teigteilkammerträger unbeweglich fixiert sind und die Messkolben zumindest in radialer Richtung R hin- und her bewegbar sind.

Durch die Verriegelungseinrichtung kann das Portioniersegment in seiner Verriegelungsposition an dem Teigteilkammerträger gesichert oder fixiert werden. Zugleich bleibt die Bewegbarkeit der Messkolben gewahrt. So ist eine vorteilhafte Verriegelung geschaffen, die das Portioniersegment auch bei sich drehendem Teigteilkammerträger zuverlässig haltert.

In einer weiteren Ausgestaltung der Erfindung weist das Portioniersegment zumindest zwei Längskanten auf, die zumindest abschnittsweise, insbesondere über ihre jeweilige vollständige Länge, nicht parallel zueinander verlaufen und/oder wobei das Portioniersegment zumindest einen Außenumfangskörper umfasst, der konisch geformt ist.

Bei einer Ausbildung eines Portioniersegments mit nicht parallelen Längskanten ist bereits auf den ersten Blick die korrekte Einbaulage des Portioniersegments vorgegeben. Der Monteur kann das Portioniersegment sofort richtig aufnehmen und muss dieses nicht aufwändig drehen, wenn er es irrtümlich falsch orientiert aufgenommen hat. Ein solchermaßen ausgebildetes Portioniersegment kann beispielsweise in eine trapezoidförmige Aussparung eingesetzt werden, wobei vorteilhafterweise nur eine korrekte Einbauposition vorliegt. Das Portioniersegment kann dann beispielsweise nicht falsch herum eingesetzt werden. Besonders vorteilhaft passt sich ein konisch geformtes Portioniersegment gut in einen trommelförmigen Teigteilkammerträger ein und ist zugleich formschlüssig montierbar.

In einer weiteren Ausbildung der Erfindung sind an dem Außenumfangsbereich des Teigteilkammerträgers wenigstens zwei Wandelemente so befestigt, dass ein Portioniersegment zwischen den wenigstens zwei Wandelementen befestigbar ist, insbesondere wobei die Längskanten der Wandelemente nicht parallel zueinander angeordnet sind, so dass ein Portioniersegment in einer Verriegelungsrichtung zwischen den Wandelementen schiebbar ist, bis die Längskanten der Wandelemente mit den korrespondierenden Längskanten des Portioniersegments in Anschlag sind.

Wird das Portioniersegment mit benachbarten Wandelementen verbunden, so ergibt sich eine geschlossene Oberfläche des Teigteilkammerträgers. Schlagen die nicht parallelen Längskanten des Portioniersegments an den Längskanten der Wandelemente an, so ist eine End- oder Verriegelungsposition des Portioniersegments für einen Monteur klar erkennbar erreicht.

In einer weiteren Ausgestaltung der Erfindung weist ein Außenumfangskörper wenigstens eines Portioniersegments wenigstens einen Befestigungsabschnitt auf, wobei der wenigstens eine Befestigungsabschnitt in einer Zwischeneinbauposition und in einer Verriegelungsposition des Portioniersegments auf einer Stützschulter eines Segmentträgers des Teigteilkammerträgers aufliegt, vorzugsweise so, dass der Befestigungsabschnitt bei einer Bewegung des Portioniersegments von der Zwischeneinbauposition in die Verriegelungsposition auf der Stützschulter gleitet, wobei vorzugsweise zwischen Befestigungsabschnitt und Stützschulter eine Gleitleiste vorgesehen ist.

Die Verbindung zwischen Portioniersegment und Teigteilkammerträger, bzw. dem Segmentträger des Teigteilkammerträgers, erfolgt vorteilhafterweise zwischen dem Befestigungsabschnitt und der Stützschulter. Das Portioniersegment ist so in radialer Richtung als auch in axialer Richtung gesichert und kann verriegelt werden. So ist eine stabile Abstützung des Portioniersegments auf einem oder mehreren Segmentträgern gewährleistet. In einer derartigen Konfiguration kann eine Gleitfläche zur Verfügung gestellt sein, auf der das Portioniersegment gleichmäßig und präzise aus der Zwischeneinbauposition in die Verriegelungsposition gleiten kann. Die Montage des Portioniersegments ist dadurch weiter erleichtert.

In einer weiteren Ausgestaltung der Erfindung sind wenigstens ein, vorzugsweise mehrere, als Federbolzen ausgebildete Befestigungselemente an dem Befestigungsabschnitt angeordnet und dass die Stützschulter eine korrespondierende Anzahl, vorzugsweise schlüssellochförmiger, zweiter Aufnahmeöffnungen aufweist, insbesondere wobei die Stützschulter wenigstens einen Freischnitt aufweist, der einer oder mehreren zweiten Aufnahmeöffnungen zugeordnet ist, wobei innerhalb des Freischnitts wenigstens ein Kopf wenigstens eines Befestigungselements bewegbar ist, wenn das Portioniersegment von einer Zwischeneinbauposition in eine Verriegelungsposition gebracht wird.

Die Erfindung wird nun anhand von Ausführungsbeispielen näher erläutert, wobei Bezug auf die beigefügten Zeichnungen genommen wird. Es zeigen jeweils in schematischer Darstellung
- FIG 1: eine seitliche Ansicht eines Teigteilkammerträgers mit den eingezeichneten Schnittebenen VI-VI und VII-VII;
- FIG 2: eine stirnseitige Ansicht eines Teigteilkammerträgers mit den eingezeichneten Schnittebenen III-III und V-V;
- FIG 3: eine Schnittdarstellung III-III eines Teigteilkammerträgers;
- FIG 4: eine Schnittdarstellung eines Teigteilkammerträgers entsprechend FIG 3 in Explosionsdarstellung;
- FIG 5: eine Schnittdarstellung V-V des Verbindungsbereiches von Portioniersegment und Teigteilkammerträger;
- FIG 6: eine Schnittdarstellung VI-VI des Teigteilkammerträgers mit einer Detaildarstellung einer Verbindung von Federbolzen und Schlüssellochaussparung;
- FIG 7: eine Schnittdarstellung VII-VII des Teigteilkammerträgers mit einer Detaildarstellung einer Verbindung von Messkolben und Messkolbenleiste;
- FIG 8: eine perspektivische Ansicht eines Teigteilkammerträgers mit Kennzeichnung der Detailansichten IX und X;
- FIG 9: eine Detailansicht IX der Verbindung von Portioniersegments und Teigteilkammerträger;
- FIG 10: eine Detailansicht X der Verbindung von Portioniersegment und Teigteilkammerträger;
- FIG 11: eine Schnittdarstellung einer Verriegelungsmechanik zur Verriegelung eines Portioniersegments am Teigteilkammerträger gemäß dem in FIG 3 eingezeichnetem Detail XI;
- FIG 12: eine Seitenansicht eines Portioniersegments mit Messkolbenleiste mit eingezeichneter Schnittebene XIII-XIII;
- FIG 13: eine Schnittdarstellung XIII-XIII eines Portioniersegments mit Messkolbenleiste;
- FIG 14: eine perspektivische Ansicht eines Portioniersegments mit Messkolbenleiste von unten;
- FIG 15: eine Schnittdarstellung eines Teigteilkammerträgers und eines Portioniersegments mit Messkolbenleiste mit eingezeichneter Schnittebene XVI - XVI gemäß einer alternativen Ausführungsform;
- FIG 16: eine Schnittdarstellung XVI - XVI eines Portioniersegments mit einer Messkolbenleiste gemäß einer alternativen Ausführungsform;
- FIG 17: eine stirnseitige Ansicht eines Teigteilkammerträgers mit ausgebautem Portioniersegment mit eingezeichneter Schnittebene XVIII - XVIII gemäß einer alternativen Ausführungsform;
- FIG 18: eine Schnittdarstellung eines Teigteilkammerträgers entsprechend FIG 17 in Explosionsdarstellung mit eingezeichneter Schnittebene XIX - XIX;
- FIG 19: eine stirnseitige Ansicht eines Teigteilkammerträgers mit eingebautem Portioniersegment entsprechend FIG 17 und FIG 18;

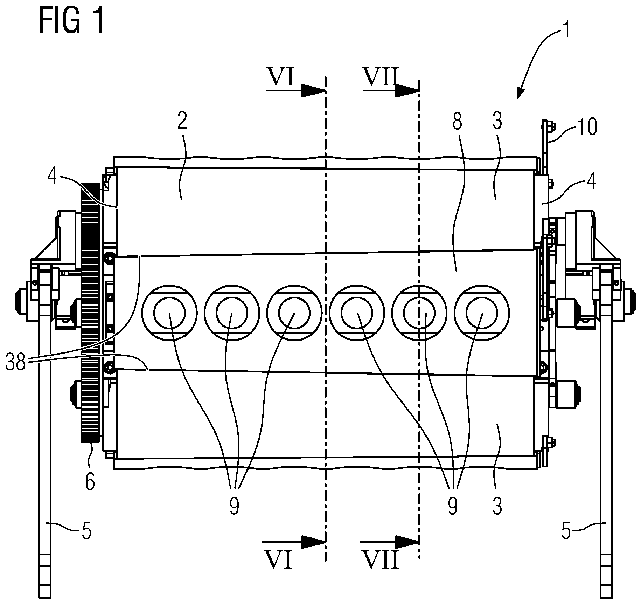

FIG 1 zeigt eine Portionier- und Wirkeinrichtung 1, die einen zylinderförmigen oder trommelförmigen Teigteilkammerträger 2 umfasst. Unter einer Portionier- und Wirkeinrichtung soll einsbesondere eine Einrichtung verstanden werden, mit der Rohmasse, wie zum Beispiel Teig portioniert werden kann und in einem folgenden Schritt die entstandenen Teiglinge mit einer Wirkvorrichtung gewirkt werden können. Der Außenumfangsbereich des Teigteilkammerträgers 2 entspricht einer Zylindermantelfläche und weist mehrere Wandsegmente 3 auf. Diese Wandsegmente 3 sind mit Außenstirnbereichen 4 des Teigteilkammerträgers 2 fest verbunden. An den Außenstirnbereichen 4 können weitere Komponenten zur Montage des Teigteilkammerträgers 2 an oder in einer Maschine zur Herstellung von Teigteilchen vorgesehen sein, wie z. B. Abstützvorrichtungen 5 oder ein Antriebsrad 6. Über das Antriebsrad 6 kann der Teigteilkammerträger 2 in eine Drehbewegung versetzt werden.

Die Wandsegmente 3 sind im Außenumfangsbereich des Teigteilkammerträgers 2 so vorgesehen, dass zwischen den Wandsegmenten 3 Portioniersegmente 8 anordenbar sind. Jedes der Portioniersegmente 8 weist eine oder mehrere Portionieröffnungen 9 auf, durch die hindurch Teig von einer (nicht dargstellten) Zuführeinrichtung in an dem Portioniersegment 8 gebildete Messkammern geschoben oder gedrückt werden kann. Die Portioniersegmente 8 sind auswechselbar oder austauschbar ausgebildet. Auf diese Weise kann der Teigteilkammerträger 2 variabel betrieben werden, insbesondere hinsichtlich der Größe und/oder Form der Portionieröffnungen 9 oder der Größe und/oder Form der Messkammern.

Zur Verriegelung und/oder Festlegung der Portioniersegmente 8 dienen Verriegelungshebel 10, die mit später beschriebenen Verriegelungsmechaniken die Portioniersegmente 8 an dem Teigteilkammerträger 2 sichern.

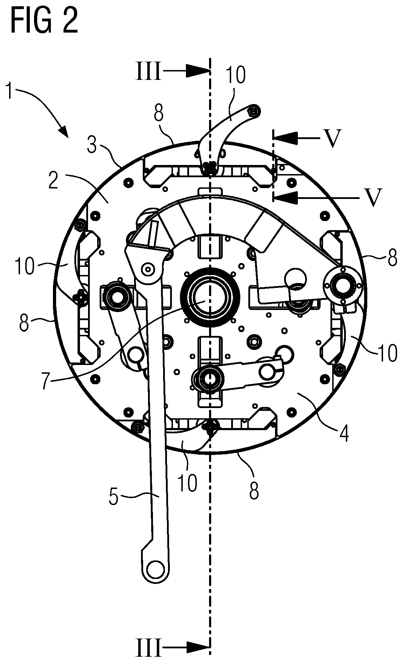

FIG 2 zeigt eine stirnseitige Ansicht eines Teigteilkammerträgers 2 mit dem Außenstirnbereich 4 und einer daran festgelegten Abstützvorrichtung 5. Der Teigteilkammerträger 2 weist eine Nabe 7 auf, die mit einer (nicht dargestellten) Welle verbunden werden kann, um den Teigteilkammerträger 2 rotatorisch bewegbar zu machen. Alternativ kann an dem Teigteilkammerträger 2 eine fest montierte Welle mit Lagern vorgesehen sein.

Der Teigteilkammerträger 2 ist so ausgebildet, dass vier Portioniersegmente 8 montiert werden können. Somit sind vier Verriegelungshebel 10 vorgesehen, von denen in dieser Ansicht der Oberste in Offenstellung und die Weiteren in Geschlossenstellung sind.

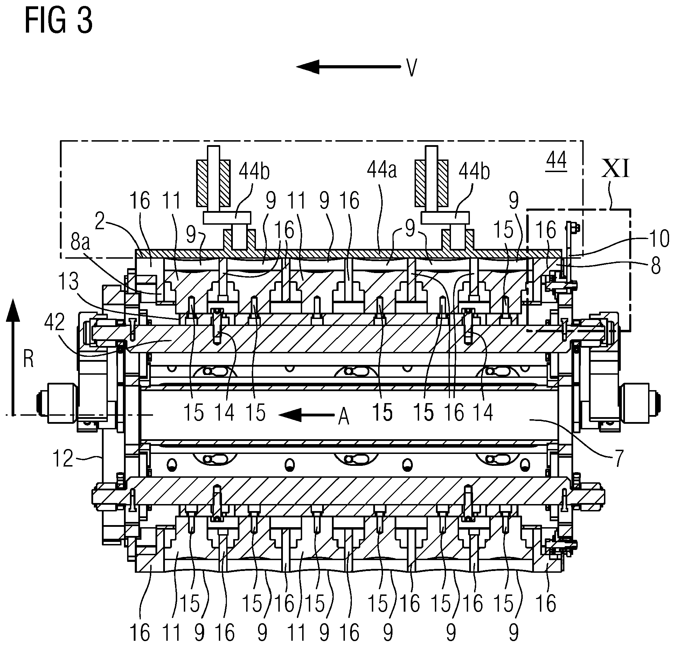

FIG 3 zeigt eine Schnittdarstellung gemäß FIG 2. Parallel zur Nabe 7, um die der Teigteilkammerträger 2 rotiert, ist eine Axialrichtung A definiert. Orthogonal zur Axialrichtung A ist eine Radialrichtung R definiert. Ferner ist eine Verriegelungsrichtung V definiert.

Portioniersegmente 8 sind um den Teigteilkammerträger 2 herum angeordnet und umfassen eine Messkolbenleiste 13. An der Messkolbenleiste 13 sind mehrere Messkolben 11 mit Kolbenfixierelementen 15 festgelegt. Die Messkolben 11 können in einer bestimmten Position starr fixiert sein oder auch in Radialrichtung R mit einer bestimmten Auslegung definiert hin und her bewegbar sein.

Die Messkolben 11 bilden mit Kammerwänden 16 Messkammern, wobei das Volumen der Messkammern durch eine unterschiedlich festlegbare Positionierung des Messkolbens variabel einstellbar ist.

Jedes Portioniersegment 8 weist einen in FIG 3 näher bezeichneten Grundkörper 8a und eine Außenumfangskörper 8b auf, innerhalb der die Portionieröffnungen 9 angeordnet sind. Die Form des Portioniersegments 8, insbesondere des Außenumfangskörpers 8b, ist leicht konisch. Dadurch entspricht die Oberfläche des Portioniersegments 8 der Mantelfläche eines Konus. Die Längskanten 38 des Außenumfangskörpers 8b sind zu einander nicht parallel, das heißt sie bilden zweidimensional gesehen mit den Stirnkanten des Außenumfangskörpers 8b ein Trapez.

Entsprechend sind auch die Wandsegmente 3 geformt, so dass der Außenumfangsbereich des Teigteilkammerträgers 2 bei montierten Wandsegmenten 3 und Portioniersegmenten 8, abgesehen von den Portionieröffnungen 9, eine geschlossene Oberfläche bildet. Die Längskanten 39 zweier, einen das Portioniersegment 8 aufnehmenden Zwischenraum bildender, Wandsegmente 3 sind ebenfalls nicht parallel zueinander angeordnet und bilden ein Trapez, welches so orientiert ist, dass das Portioniersegment passend zwischen die beiden Wandsegmente 3 eingefügt werden kann.

Durch die leicht konische Oberfläche des Portioniersegments 8 sind die den Außenstirnbereichen 4 des Teigteilkammerträgers 2 zugewandten Enden des Portioniersegments 8 unterschiedlich breit ausgebildet.

Ferner kann die Portionier- und Wirkeinrichtung 1 eine an sich bekannte Wirkvorrichtung 44 aufweisen. Die Wirkvorrichtung 44 kann so positioniert werden, dass ein in Zwölf-Uhr-Stellung, also in Wirkstellung, befindliches Portioniersegment 8 unmittelbar benachbart zu der Wirkvorrichtung 44 angeordnet ist. Zur Durchführung des Wirkvorgangs werden zunächst die Messkolben 11 in eine solche Position gebracht, dass die in den Messkammern befindlichen Teiglinge nach außen bewegt werden und so in Kontakt mit einem Wirkwerkzeug 44a der Wirkvorrichtung 44 kommen. Die Bewegung der Messkolben 11 kann beispielsweise durch eine entsprechende Ausbildung einer später zu beschreibenden Steuerkurve 41 bestimmt sein. Durch eine rotierende Bewegung der Exzenter 44b wird das Wirkwerkzeug 44a in Wirkbewegung versetzt und die mit dem Wirkwerkzeug 44a in berührendem Kontakt stehenden Teiglinge werden gewirkt.

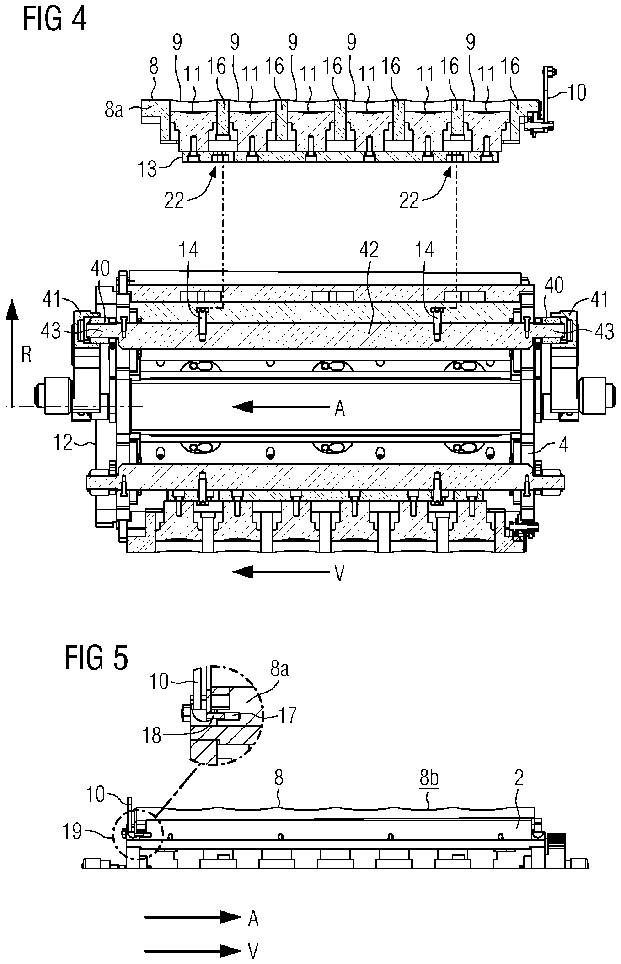

FIG 4 zeigt den Teigteilkammerträger 2 wie in FIG 3 in teilweiser Explosionsdarstellung. Das obere Portioniersegment 8 ist dabei in einer Vor-Einbausituation gezeigt. Die Anordnung und Befestigung des Portioniersegments am Teigteilkammerträger 2 wird im folgenden beispielhaft für ein Portioniersegment 8 beschrieben, kann jedoch für alle am Teigteilkammerträger 2 derart ausgeführt sein.

Der Segmentträger 12 weist eine Traverse 42 auf, die mit zumindest einem Endabschnitt 43 über einen Außenstirnbereich 4 der Portioniereinrichtung 1 hinausragt. An dem Endabschnitt 43 ist eine Kurvenrolle 40 angeordnet, die mit einer gegenüber dem Segmentträger 12 drehfesten Steuerkurve 41 zusammenwirkt. Wird der Segmentträger 12 um seine Drehachse rotierend bewegt, so wird der Endabschnitt 43 in der Steuerkurve 41 zwangsgeführt. Die Traverse 42 ist innerhalb des Segmentträgers 12 in radialer Richtung R beweglich gelagert, so dass die Zwangsführung des Endabschnitts 43 in der Steuerkurve 41 eine genau definierte Bewegungskurve der Traverse 42 in radialer Richtung R zur Folge hat. Die Bewegungskurve der Traverse 42 entspricht dabei der Steuerkurve 41. Mit anderen Worten: Bei einer Rotation des Segmentträgers 12 um seine Drehachse, beschreibt die Traverse 42 eine genau definierte Bewegung in radialer Richtung R in Abhängigkeit von der Ausbildung der Steuerkurve 41.

Ist nun das Portioniersegment 8, wie in FIG 3 dargestellt, auf dem Segmentträger 12 festgelegt, so sind Außenumfangskörper 8b und Grundkörper 8a an dem Segmentträger unbeweglich fixiert. Die Messkolbenleiste 13 und die mit dieser verbundenen Messkolben 11 sind an der Traverse 42 fixiert und gegenüber dem Grundkörper 8a und dem Außenumfangskörper 8b beweglich. Bei einer Rotation des Segmentträgers 12 werden also die Messkolbenleiste 13 und die Messkolben 11 von der, eine Bewegung in radialer Richtung R ausführende Traverse 42 mitbewegt. Die Messkolben führen dabei einen Kolbenhub relativ zu den Messkammerwänden 16 aus. Die Größe der Messkammern ändert sich also während eines Umlaufs des Segmentträgers 12 in Abhängigkeit von der jeweiligen Ausbildung der Steuerkurve 41. Die Messkolben 11 werden also innerhalb der Messkammer zwangsgetrieben hin- und herbewegt. Hierdurch ist ermöglicht, dass Teig in der Messkammer in Zusammenwirkung mit einer Wirkeinrichtung nicht nur portioniert sondern auch vorteilhaft gewirkt werden kann. Das Portioniersegment kann also an dem Segmentträger 12 montiert werden, wobei zugleich die Messkolbenleiste 13 mit dem Antrieb der Messkolbenleiste 13 bzw. der Messkolben 11 gekoppelt werden kann.

FIG 5 in Zusammenschau mit FIG 3 zeigt, dass die Portioniersegmente 8 den Grundkörper 8A, der die Kammerwände 16 umfasst, und den Außenumfangskörper 8B aufweisen. Das Portioniersegment 8 mit Grundkörper 8A, Außenumfangskörper 8B, Messkolben 11 und Messkolbenleiste 13 kann als Ganzes auf den Teigteilkammerträger 2 montiert werden. Zu diesem Zweck sind Befestigungselemente 14 an einem Segmentträger 12 vorgesehen. Um das Portioniersegment 8 an dem Teigteilkammerträger 2 festlegen oder verriegeln zu können, ist der Verriegelungshebel 10 vorgesehen.

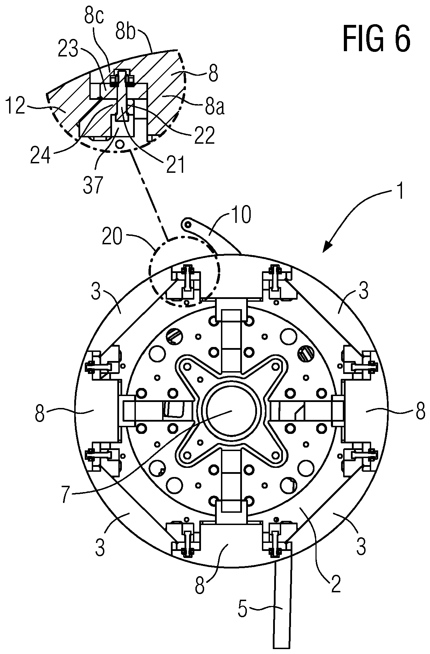

FIG 6 zeigt eine Schnittdarstellung des Teigteilkammerträgers 2 gemäß FIG 1. Der Teigteilkammerträger 2 weist Wandsegmente 3 und Portioniersegmente 8 auf.

Das vergrößert dargestellte Detail zeigt, dass der Segmentträger 12 eine Stützschulter 24 aufweist. Die Stützschulter 24 ist mit zweiten Aufnahmeöffnungen 22 versehen. Die zweiten Aufnahmeöffnungen 22 können schlüssellochförmig ausgebildet sein.

Das Portioniersegment 8 weist ferner einen Befestigungsabschnitt 8C auf, an dem ein Federbolzen 21 befestigt, beispielsweise federnd geklemmt, ist. Der Federbolzen 21 weist an seinem freien Ende einen Kopf auf, der einen größeren oder weiteren Durchmesser als der Bolzenkörper selbst hat.

In Radialrichtung R in Richtung auf die Nabe 7 des Teigteilkammerträgers 2 hin weist der Segmentträger 12 einen Freischnitt 37 auf, in den der Kopf des Federbolzens 21 ragt. Da die zweiten Aufnahmeöffnungen 22 zumindest abschnittsweise eine geringere Weite oder einen geringeren Durchmesser aufweisen, als der Kopf des Federbolzens 22, kann dieser in klemmender Verbindung das Portioniersegment 8 an dem Segmentträger 12 haltern oder fixieren. Zwischen Stützschulter 24 des Trägergrundkörpers 12 und Befestigungsabschnitt 8C des Portioniersegments 8 ist eine Gleitleiste 23 angeordnet, die Gleit- und Verbindungsflächen zur Verfügung stellt, auf denen das Portioniersegment 8 in eine End- oder Betriebsposition oder aus der End- oder Betriebsposition heraus gleiten kann.

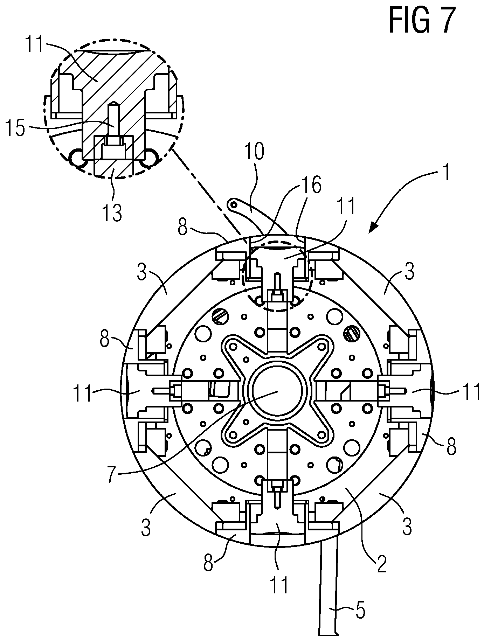

FIG 7 zeigt eine Schnittdarstellung des Teigteilkammerträgers 2 nach FIG 1, in der Messkammern erkennbar sind. Die Messkammern werden seitlich durch Kammerwände 16 und in Radialrichtung R durch den Messkolben 11 begrenzt. Das vergrößert dargestellte Detail zeigt ein Kolbenfixierelement 15 zur Fixierung und/oder Positionierung des Messkolbens 11 an der Messkolbenleiste 13.

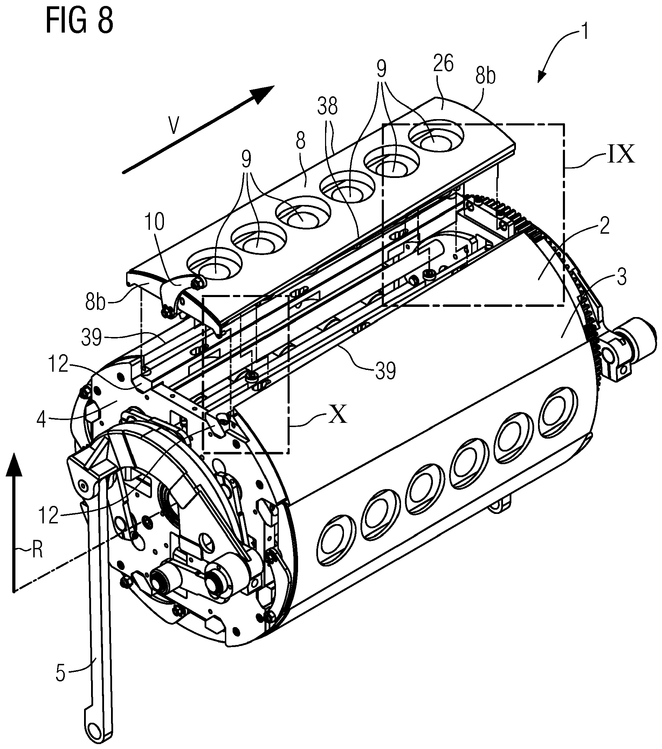

FIG 8 zeigt eine perspektivische Ansicht einer Portioniereinrichtung 1 mit einem nicht eingebauten Portioniersegment 8. Das Portioniersegment 8 befindet sich in dieser Ansicht in einer Position oberhalb einer zwischen zwei Wandsegmenten 3 gebildeten Aussparung des Teigteilkammerträgers 2. Das Portioniersegment 8 weist Stirnwände 27 auf, die mit den Außenstirnbereichen 4 des Teigteilkammerträgers 2 bei eingebautem Zustand des Portioniersegments 1 eine kompakte und geschlossene Oberfläche bilden.

Das Portioniersegment 8 wird in die Aussparung montiert, indem es in einem ersten Einbauschritt in radialer Richtung R auf den Teigteilkammerträger 2 zu bewegt wird, bis das Portioniersegment 8 insbesondere mit seinem Grundkörper 8A auf dem Segmentträger 12 aufliegt.

Hierbei kann zusätzlich vorteilhaft eine Gleitleiste 23 zwischen Grundkörper 8a und Segmentträger 12 vorgesehen sein. Sobald das Portioniersegment 8 auf dem Segmentträger 12 aufliegt, ist eine Zwischeneinbauposition des Portioniersegments 8 definiert, von der aus das Portioniersegment 8 in Verriegelungsrichtung V in eine Verriegelungsposition geschoben werden kann.

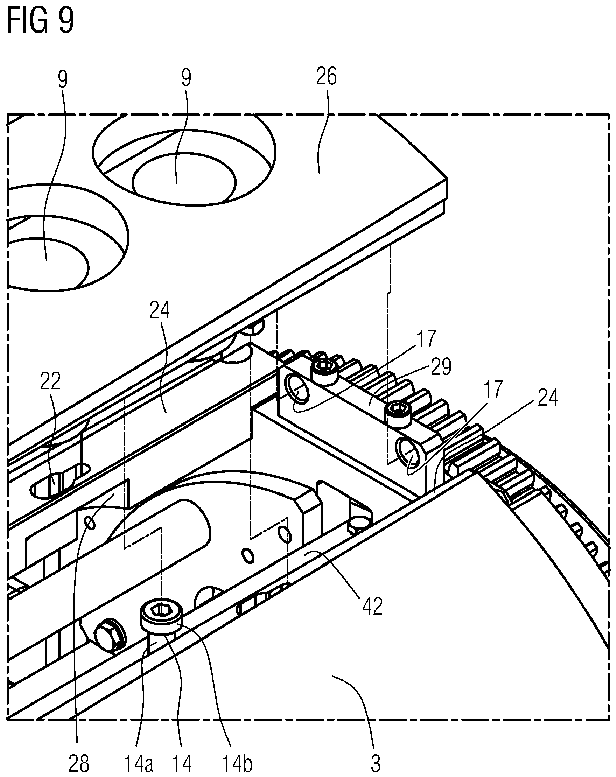

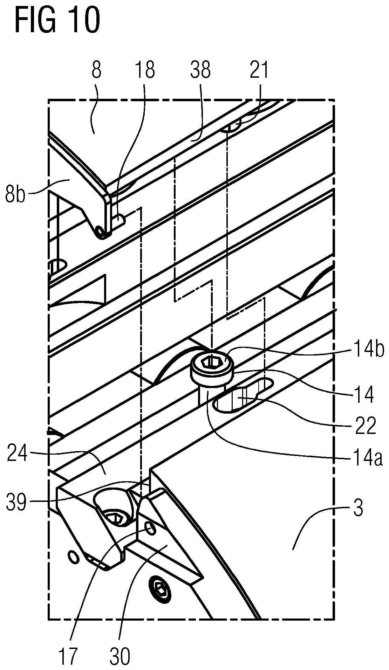

FIG 9 und FIG 10 zeigen hierbei die Festlegungsmittel, mittels denen das Portioniersegment 8 an dem Segmentträger 12 oder der Traverse 42 festgelegt werden kann.

Befestigungselemente 14, beispielsweise Federbolzen mit einem Schaft 14a und mit einem definiertem Kopf 14b, sind an der Traverse 42 und dem Grundkörper 8a des Portioniersegments 8 vorgesehen. Die Befestigungselemente 14 sind dabei so vorgesehen, dass sie bei einem Bewegen des Portioniersegments 8 in Radialrichtung R in die schlüssellochförmigen zweiten Aufnahmeöffnungen 22 gebracht werden können.

Ferner sind ein vorderer Anschlag 30 und ein hinterer Anschlag 29 vorgesehen, die eine Bewegung des Portioniersegments 8 in Verriegelungsrichtung V abstoppen. Erste Aufnahmeöffnungen 17 sind in den Anschlägen 29, 30 vorgesehen, in denen in Verriegelungsrichtung V orientierte Verriegelungszapfen 18 aufgenommen werden können, wenn das Portioniersegment 8 auf die Anschläge 29, 30 zu bewegt wird. Um die Bewegung in Verriegelungsrichtung V zu erleichtern, ist die Gleitleiste 23 an dem Portioniersegment 8 angebracht und kann so auf der Stützschulter 24 gleiten.

Unterhalb der schlüssellochförmigen zweiten Aufnahmeöffnung 22 ist eine Aussparung 28 in der Stützschulter 24 vorgesehen, innerhalb der wenigstens der Kopf des Befestigungselementes 14 hin und her bewegbar ist. Die Aussparung 28 ist als Freischnitt ausgebildet, wobei das Befestigungselement 14 mit seinem Schaft 14a durch die zweite Aufnahmeöffnung 22 hindurch ragt und der Kopf 14b des Befestigungselements 14 innerhalb der Aussparung bewegt werden kann. Mit anderen Worten kann das Portioniersegment 8 mittels des Befestigungselements 14 an der Stützschulter 24 lösbar geklemmt werden, wobei der Kopf 14b auf einer von dem Portioniersegment 8 abgewandten Seite der Stützschulter 24 aufliegt.

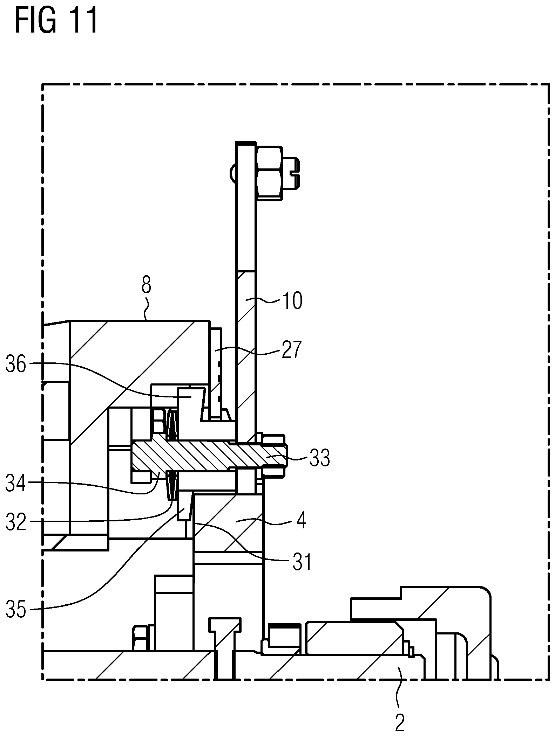

FIG 11 zeigt den Verriegelungshebel 10 mit seinem Verriegelungsmechanismus, wobei das Portioniersegment 8 in Verriegelungsstellung am Teigteilkammerträger 2 positioniert ist. Der Verriegelungshebel 10 ist dabei drehfest mit einem Anzugbolzen 33 verbunden, der wiederum drehfest mit einer einem ersten Riegelabschnitt 35 und einem zweiten Riegelabschnitt 36 formenden Hülse verbunden ist. Bei einem Umlegen des Verriegelungshebels 10 werden der erste und der zweite Riegelabschnitt 35, 36 gegenüber einer an einem Außenstirnbereich 4 vorgesehenen Anzugschulter 34 verdreht, so dass das Portioniersegment 8 und der Teigteilkammerträger 2 klemmend fest miteinander verbunden sind.

Der Verriegelungshebel 10 ist dabei über die Anzugschulter 34 und ein Federelement 31 mit dem ersten und zweiten Riegelabschnitt 35, 36 verbunden, so dass auf die Verriegelungsmechanik wirkende Stöße gedämpft werden.

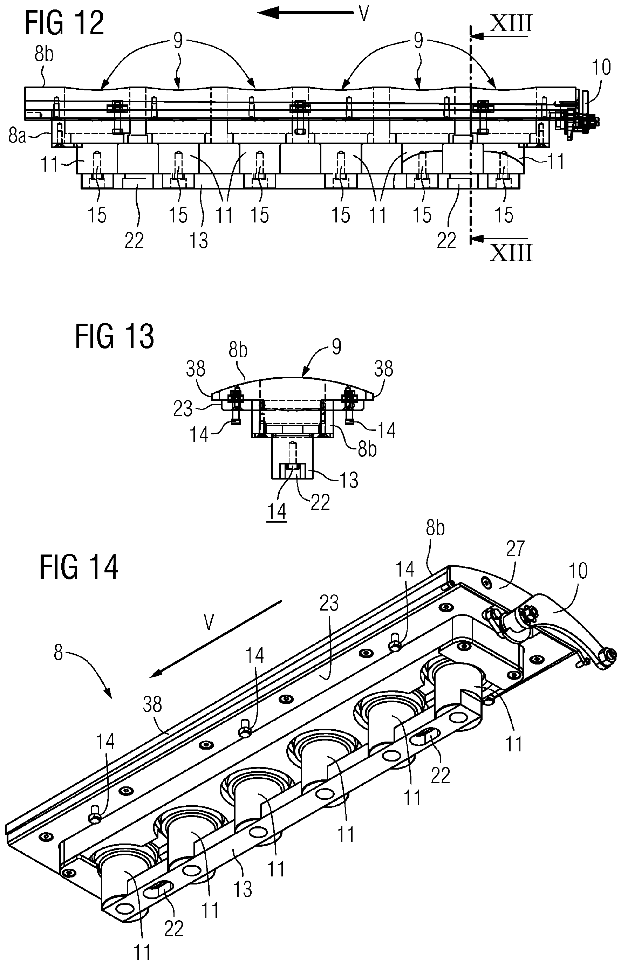

FIG 12 zeigt eine Seitenansicht eines Portioniersegments 8 mit einer Messkolbenleiste 13. Die Messkolben 11 sind mit Kolbenfixierelementen 15 mit der Messkolbenleiste 13 verbunden. Die Messkolbenleiste 13 weist zudem zweite Aufnahmeöffnungen 22 auf, die schlüssellochförmig ausgebildet sind und so an der Messkolbenleiste 13 orientiert sind, dass in die zweite Aufnahmeöffnung 22 ragende und an der Traverse 42 des Segmentträgers 12 vorgesehene Befestigungselemente 14 (nicht dargestellt) bei einer Bewegung des Portioniersegments 8 in Verriegelungsrichtung V gleiten und mit der Messkolbenleiste 13 des Portioniersegments 8 an der Traverse 42 durch Klemmung und Formschluss festlegen.

In der Verriegelungsposition kann das Portioniersegment 8 durch Umlegen des Verriegelungshebels 10 verriegelt werden.

FIG 13 zeigt eine Schnittdarstellung des in FIG 11 gezeigten Portioniersegments 8. Die Gleitleiste 23 ist mit dem Außenumfangskörper 8b verschraubt. Befestigungselemente 14 sind an dem Außenumfangskörper 8b vorgesehen und ragen mit einem freien Ende über die Gleitleiste 23 hinaus, so dass jeweils Kopf und ein Abschnitt des Schaftes des Befestigungselements 14 freiliegen.

Die zweite Aufnahmeöffnung 22 zeigt eine Verengung, in die der freie Schaftabschnitt des Befestigungselements 14 gleiten kann, wobei die Länge des freien Schaftabschnitts sowie des Kopfes 14b des Befestigungselements 14 so mit den Dimensionen der zweiten Aufnahmeöffnung 22 abgestimmt ist, dass der Kopf 14b des Befestigungselements 14 auf einer Klemmfläche der Messkolbenleiste aufliegen kann und dieses an der Traverse 42 Segmentträger 12 festklemmt.

FIG 14 zeigt eine perspektivische Ansicht des Portioniersegments 8. Entlang einer Längsseitige des Portioniersegments 8 sind mehrere Befestigungselemente 14 so angeordnet, dass sie in einer Einbausituation in Richtung auf einen Segmentträger 12 hin orientiert sind.

Zugleich weist die Messkolbenleiste 13 mehrere zweite Aufnahmeöffnungen 22 auf, die in einer Einbausituation in Richtung auf an der Traverse 42 eines Segmentträger 12 vorgesehene Befestigungselemente 14 orientiert sind.

Das Portioniersegment 8 ist konisch geformt, so dass eine der Stirnseiten 27 weniger lang ist als die andere. Mit anderen Worten ist das Portioniersegment 8 an dem einen Ende weniger breit als an dem gegenüberliegenden Ende. Das Portioniersegment 8 wird bei einem Einbau mit der weniger breiten Stirnseite 27 voran in Verriegelungsrichtung V eingeschoben, bis die Verriegelungsposition erreicht ist. So kann ein Formschluss mit den benachbarten Wandsegmenten 3 erreicht werden.

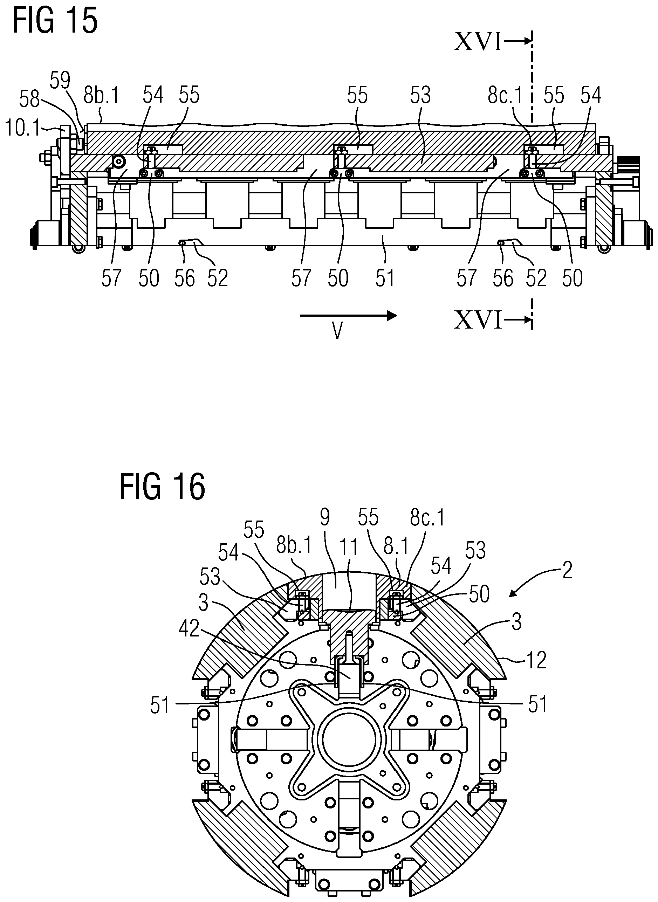

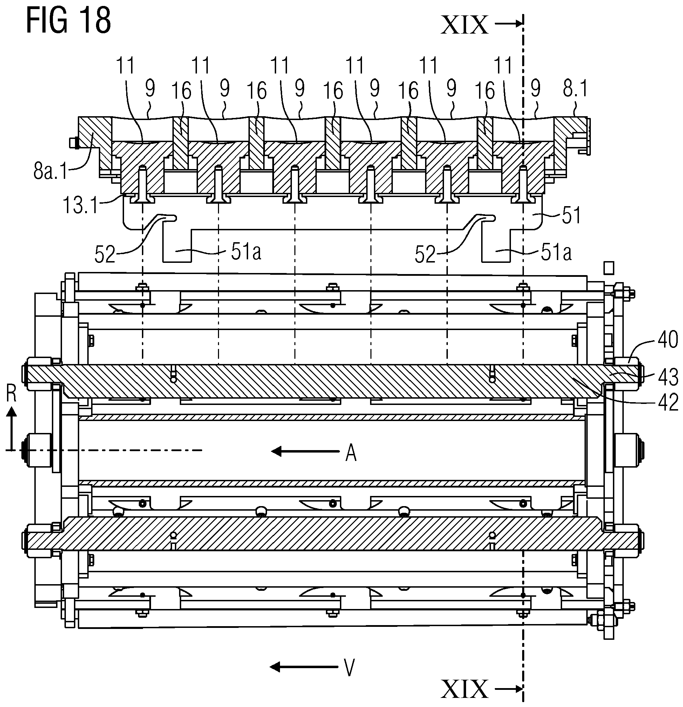

FIG 15 zeigt eine geschnittene Ansicht eines Portioniersegments 8.1 mit Messkolbenleiste gemäß einer alternativen Ausführungsform. Ferner zeigt FIG 18 eine geschnittene Ansicht eines Teigteilkammerträgers 2 mit dem Portioniersegment 8.1 in ausgebautem Zustand. Selbstverständlich können die verschiedenen beschriebenen Ausführungsformen miteinander kombiniert werden.

In FIG 15 ist, im Unterschied zu den bisher beschriebenen Ausführungen, der Verriegelungshebel 10.1 an dem Teigteilkammerträger 2 vorgesehen. Bei der Verriegelung des Teigteilkammerträgers 2 in Verriegelungsposition kann der Verriegelungshebel 10.1 einen Verriegelungsbolzen 58 in Verriegelungsrichtung V drücken und in Kontakt mit einer an dem Portioniersegment 8 vorgesehenen Verriegelungsfläche 59 bringen, so dass das eine Bewegung des Portioniersegment 8 entgegen der Verriegelungsrichtung V verhindert ist. Das Portioniersegment 8 ist somit an dem Teigteilkammerträger 2 fixiert.

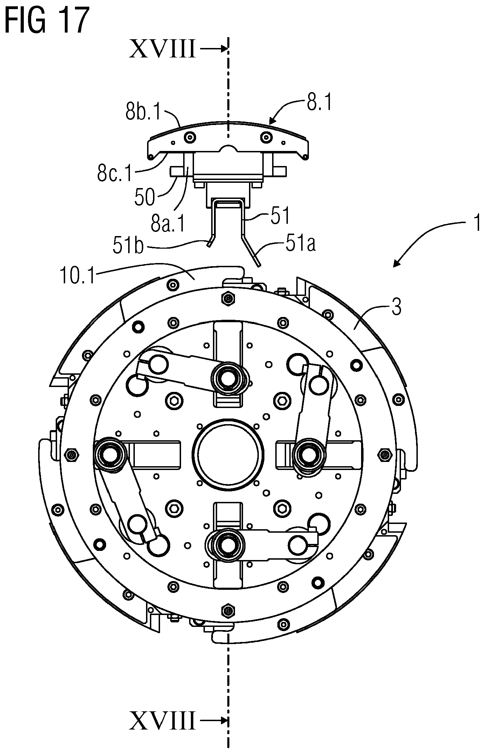

Eine Zusammenschau aus FIG 15, FIG 17 und FIG 18 zeigt ein Portioniersegment 8.1, welches ein Arretierelement 51 aufweist, das langestreckt an der Messkolbenleiste 13.1 angebracht sind. Das Arretierelement 51 kann einstückig aus einem Blech mit U-förmigem Profil gebildet sein, wobei eine erste Lasche 51a und eine zweite Lasche 51b vorgesehen sind. Das Arretierelement 51 ist mit dem Boden des U-förmigen Profils an der Messkolbenleiste 13.1 verschraubt und derart angeordnet, dass das U-förmige Profil die Traverse 42 umgreift, wenn das Portioniersegment 8.1 in radialer Richtung R in seine vorgesehene Betriebsposition bewegt und dort verriegelt wird. Die erste Lasche 51a und die zweite Lasche 51b sind so von dem U-förmigen Profil abgebogen, dass das U-förmige Profil wenigstens abschnittsweise trichterförmig ausgebildet ist. Auf diese Weise ist die Montage des Portioniersegments 8.1 vereinfacht, da das U-förmige Profil auch bei ungenauer anfänglicher Positionierung des Portioniersegments 8.1 durch den Monteur die Traverse 42 umgreift und das Portioniersegment 8.1 sich mittels des Arretierelements 51 selbst relativ zur Traverse 42 positioniert.

Das Arretierelement 51 weist zudem Arretieraufnahme 52 auf, die als Langloch geformt sind und sich in eingebautem Zustand des Portioniersegments 8.1 in Verriegelungsrichtung V erstrecken. An der Traverse 42 sind Traversenbolzen 56 angeordnet, die sich jeweils quer zu den Arretieraufnahmen 52 erstrecken. Wird das Portioniersegment 8.1 bei der Montage durch eine Bewegung in radialer Richtung R in eine Zwischeneinbauposition an dem Teigeilkammerträger 2 gebracht, so sind die Traversenbolzen 56 so an der Traverse 42 positioniert, dass bei einer weiteren Bewegung des Portioniersegments 8.1 in axialer Richtung A aus der Zwischeneinbauposition in eine Verriegelungsposition das Arretierelement 51 an den Traversenbolzen 56 entlang gleitet, so dass die Traversenbolzen in den Arretieraufnahmen 52 aufgenommen sind und das Portioniersegement 8.1 wenigstens in Radialrichtung R festlegen. Durch die Verbindung zwischen Arretieraufnahmen 52 und Traversenbolzen 56 ist zudem eine Übertragung der Bewegung der Traverse 42 in und entgegen die Radialrichtung R gesichert, so dass die Messkolbenleiste 13.1 von der Traverse 42 in beide Richtungen bewegt werden kann.

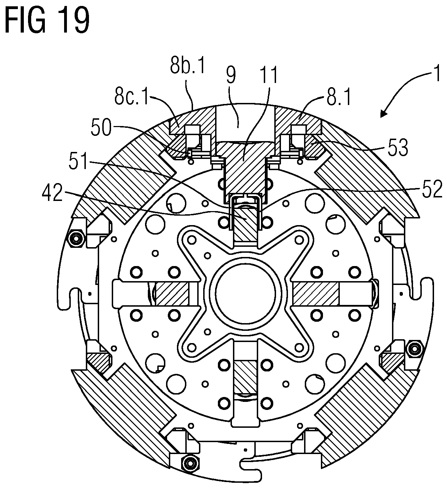

Eine Zusammenschau der FIG 15, FIG 17 und FIG 18 mit FIG 16 und FIG 19 zeigt außerdem eine alternative Ausführung der Befestigung des Portioniersegments 8.1 an dem Teigteilkammerträger 2. FIG 16 zeigt eine an dem Teigteilkammerträger 2 angeformte oder befestigte Auflage 53, auf der sich das Portioniersegment 8.1 mit seinem Befestigungsabschnitt 8c.1 abstützt. An der Auflage 52 ist ein federndes Druckstück 54 fixiert, beispielsweise angeschraubt. Das Portioniersegment 8.1 kann eine geeignete Anzahl an Druckstücken 54 aufweisen, deren Funktion im Folgenden beispielhaft dargestellt wird.

Das Portioniersegment 8.1 weist an seinem Befestigungsabschnitt 8c.1 eine Befestigungsschulter 50 auf, die beispielsweise ebenfalls an dem Befestigungsabschnitt 8c.1 angeschraubt sein kann. Das federnde Druckstück 54 ist dabei so an der Auflage 52 befestigt, dass es eine Druckkraft in Radialrichtung R nach Innen ausüben kann.

Bei einer Bewegung des Portioniersegments 8.1 aus einer Zwischeneinbauposition in eine Verriegelungsposition in Verriegelungsrichtung V wird die Befestigungsschulter 50 so unter das federnde Druckstück 54 bewegt, dass das Druckstück 54 einen Fixierdruck auf die Befestigungsschulter ausübt und so das Portioniersegment 8.1 in seiner Verriegelungsposition verklemmt. Der Befestigungsabschnitt 8c.1 weist dabei gegebenenfalls einen Freischnitt 55 auf, in den eine Abschnitt, beispielsweise ein Schraubenkopf, des federnden Druckstücks 55 aufgenommen werden kann. Auf diese Weise ist das Portioniersegment 8.1 in Radialrichtung R und entgegen der Radialrichtung R festgelegt und zumindest durch eine definierte Klemmkraft entgegen der Verriegelungsrichtung gehalten.

### Bezugszeichenliste

- 1: Portioniereinrichtung
- 2: Teigteilkammerträger
- 3: Wandsegmente
- 4: Außenstirnbereiche
- 5: Abstützvorrichtungen
- 6: Antriebsrad
- 7: Nabe
- 8, 8.1: Portioniersegment
- 8a, 8a.1: Grundkörper
- 8b, 8b.1: Außenumfangskörper
- 8c, 8c.1: Befestigungsabschnitt
- 9: Portionieröffnungen
- 10, 10.1: Verriegelungshebel
- 11: Messkolben
- 12: Segmentträger
- 13, 13.1: Messkolbenleiste
- 14: Befestigungselement
- 14a: Schaft
- 14b: Kopf
- 15: Kolbenfixierelemente
- 16: Messkammerwände
- 17: Aufnahmeöffnung
- 18: Verriegelungszapfen
- 19: erste Fixiereinrichtung

- 21: Federbolzen
- 22: zweite Aufnahmeöffnung
- 23: Gleitleiste
- 24: Stützschulter

- 27: Stirnwand
- 28: Aussparung
- 29: hinterer Anschlag
- 30: vorderer Anschlag
- 31: Federelement
- 33: Anzugbolzen
- 34: Anzugschulter
- 35: erster Riegelabschnitt
- 36: zweiter Riegelabschnitt
- 37: Freischnitt
- 38: Längskante des Portioniersegments
- 39: Längskante des Wandsegments
- 40: Kurvenrolle
- 41: Steuerkurve
- 42: Traverse
- 43: Endabschnitt
- 44: Wirkvorrichtung
- 44a: Wirkwerkzeug
- 44b: Exzenter

- 50: Befestigungsschulter
- 51: Arretierelement
- 51a, 51b: erste, zweite Lasche
- 52: Arretieraufnahmen
- 53: Auflage
- 54: Druckstück
- 55: Freischnitt
- 56: Traversenbolzen
- 57: Einführöffnungen
- 58: Verriegelungsbolzen
- 59: Verriegelungsfläche

- A: Axialrichtung
- R: Radialrichtung
- V: Verriegelungsrichtung

## Patentansprüche

1. Portionier- und Wirkeinrichtung (1) zum Herstellen von Teigteilchen, mit einem trommelförmigen Teigteilkammerträger (2) und wenigstens einem Portioniersegment (8, 8.1), wobei an einem Außenumfangsbereich des trommelförmigen Teigteilkammerträgers (2) das wenigstens eine Portioniersegment (8, 8.1) auswechselbar befestigbar ist, wobei das wenigstens eine Portioniersegment (8, 8.1) wenigstens eine, vorzugsweise mehrere Messkammern mit einem darin hin- und her beweglichen Messkolben (11) aufweist und wobei das wenigstens eine Portioniersegment (8, 8.1) in eine Zwischeneinbauposition an dem Teigteilkammerträger (2) bringbar ist und aus der Zwischeneinbauposition in eine Verriegelungsposition an dem Teigteilkammerträger (2) bringbar ist, **dadurch gekennzeichnet, dass** die Portionier- und Wirkeinrichtung (1) eine Antriebseinrichtung für das wenigstens eine Portioniersegment (8, 8.1) aufweist, durch welche der wenigstens eine Messkolben (11) zwangsgeführt in radialer Richtung nach außen und innen antreibbar ist, wobei das wenigstens eine Portioniersegment (8, 8.1) durch die Verschiebung des wenigstens einen Portioniersegments (8, 8.1) aus der Zwischeneinbauposition in die Verriegelungsposition an die Antriebseinrichtung betriebsbereit ankoppelt.

2. Portionier- und Wirkeinrichtung (1) nach Anspruch 1, **dadurch gekennzeichnet, dass** das wenigstens eine Portioniersegment durch eine Bewegung in radialer Richtung (R) in die Zwischeneinbauposition an dem Teigteilkammerträger (2) bringbar ist und aus der Zwischeneinbauposition durch eine Bewegung in axialer Richtung (A) in die Verriegelungsposition an dem Teigteilkammerträger (2) verschiebbar ist.

3. Portionier- und Wirkeinrichtung (1) nach einem der vorhergehenden Ansprüche, **dadurch gekennzeichnet, dass** der Teigteilkammerträger (2) eine durch die Antriebseinrichtung bewegbare Traverse (42) aufweist und das wenigstens eine Portioniersegment (8, 8.1) eine Messkolbenleiste (13), an der wenigstens ein, vorzugsweise alle, Messkolben (11) des wenigstens einen Portioniersegments (8, 8.1) festgelegt ist, aufweist, wobei die Messkolbenleiste (13) in der Verriegelungsposition an der Traverse (42) festgelegt ist und bei einer Bewegung der Traverse (42) mit dieser mitbewegt wird.

4. Portionier- und Wirkeinrichung (1) nach einem der vorhergehenden Ansprüche, **dadurch gekennzeichnet, dass** das wenigstens eine Portioniersegment (8, 8.1) wenigstens ein, insbesondere an der Messkolbenleiste (13) befestigtes, Arretierelement (51), mit einem vorzugsweise wenigstens abschnittsweise u-förmigen Profil, aufweist, welches bei einem Verbringen des wenigstens einen Portioniersegments (8, 8.1) in die Zwischeneinbauposition in Umgriff mit einer Traverse (42) des Teigteilkammerträgers (2) kommt.

5. Portionier- und Wirkeinrichung (1) nach Anspruch 4, **dadurch gekennzeichnet, dass** das Arretierelement (51) zumindest abschnittsweise einen trichterartigen Querschnitt aufweist, der von einer ersten Lasche (51a) und einer zweiten Lasche (51b) geformt ist, wobei die erste und zweite Lasche (51a, 51b) jeweils als von einem Grundkörper des Arretierelements (51) abgebogene Laschen ausgebildet sind und/oder wobei das Arretierelement (51) Arretieraufnahmen (52) aufweist, die vorzugsweise langlochartig ausgebildet sind und wobei an der Traverse (42) angeordnete Traversenbolzen (56) bei einer Bewegung des wenigstens einen Portioniersegments (8, 8.1) aus der Zwischeneinbauposition in die Verriegelungposition mit den Arretieraufnahmen in Eingriff gebracht werden und das Arretierelement (51) an der Traverse (42) festlegen.

6. Portionier- und Wirkeinrichtung (1) nach einem der vorhergehenden Ansprüche, **dadurch gekennzeichnet, dass** eine Wirkvorrichtung (44) vorgesehen ist, die in Wirkstellung, vorzugsweise in Zwölf-Uhr-Stellung, des Teigteilkammerträgers (2) unmittelbar benachbart zu dem montierten Portioniersegment (8, 8.1) oder zu einem der montierten Portioniersegmente (8, 8.1) anordenbar ist, wobei der oder die Messkolben (11) in Wirkstellung so positioniert sind, dass der oder die in der oder den Messkammern befindlichen Teiglinge so positioniert sind, dass sie von der Wirkvorrichtung (44) gewirkt werden können.

7. Portionier- und Wirkeinrichtung (1) nach einem der vorhergehenden Ansprüche, **dadurch gekennzeichnet, dass** an dem Teigteilkammerträger (2) und dem wenigstens einen Portioniersegment (8, 8.1) Befestigungselemente (14, 22) so angeordnet und ausgebildet sind, dass an dem wenigstens einen Portioniersegment (8, 8.1) angeordnete Befestigungselemente (14, 22) mit an dem Teigteilkammerträger (2) angeordneten Befestigungselementen (14, 22) so zusammenwirken können, dass das wenigstens eine Portioniersegment (8, 8.1) an dem Teigteilkammerträger (2) in der Zwischeneinbauposition positionierbar ist und aus der Zwischeneinbauposition in die Verriegelungsposition verschiebbar ist.

8. Portionier- und Wirkeinrichtung (1) nach einem der vorhergehenden Ansprüche, **dadurch gekennzeichnet, dass** der Teigteilkammerträger (2) wenigstens ein als federndes Druckstück (54) ausgebildetes Befestigungselement umfasst, welches so positioniert ist, dass es eine Druckkraft im Wesentlichen senkrecht zur axialen Richtung (A) ausüben kann und wobei das wenigstens eine Portioniersegment (8, 8.1) wenigstens eine Befestigungsschulter (50) umfasst, die so an dem wenigstens einen Portioniersegment (8, 8.1) angeordnet ist, dass die Befestigungsschulter (50) in der Zwischeneinbauposition des wenigstens einen Portioniersegments (8, 8.1) so zu dem federnden Druckstück (54) positioniert ist, dass keine Druckkraft von dem federnden Druckstück (54) auf die Befestigungsschulter (50) übertragen wird und/oder wobei bei der Bewegung aus der Zwischeneinbauposition in die Verriegelungsposition eine Druckkraft von dem federnden Druckstück (54) auf die Befestigungsschulter (50) übertragen wird und/oder wobei die Befestigungsschulter (50) in der Verriegelungsposition des wenigstens einen Portioniersegments (8, 8.1) so zu dem federnden Druckstück (54) positioniert ist, dass eine Druckkraft von dem federnden Druckstück (54) auf die Befestigungsschulter (50) übertragen wird.

9. Portionier- und Wirkeinrichtung (1) nach Anspruch 8, **dadurch gekennzeichnet, dass** die Befestigungsschulter (50) von dem Befestigungsabschnitt (8c.1) beabstandet ist und mit diesem eine Aussparung (55) bildet, in welcher das federnde Druckstück (54) aufgenommen ist, wenn sich das wenigstens eine Portioniersegment (8, 8.1) in einer Verriegelungsposition befindet.

10. Portionier- und Wirkeinrichtung (1) nach einem der vorhergehenden Ansprüche, **dadurch gekennzeichnet, dass** wenigstens eine Verriegelungseinrichtung (10) vorgesehen ist, durch die das wenigstens eine Portioniersegment (8, 8.1) in der Verriegelungsposition an dem Teigteilkammerträger (2) verriegelt wird, insbesondere so, dass Grundkörper (8a, 8a.1) und Außenumfangskörper (8b, 8b.1) an dem Teigteilkammerträger unbeweglich fixiert sind und die Messkolben (11) zumindest in radialer Richtung R hin- und her bewegbar sind.

11. Portionier- und Wirkeinrichtung (1) nach einem der vorhergehenden Ansprüche, **dadurch gekennzeichnet, dass** das wenigstens eine Portioniersegment (8, 8.1) zumindest zwei Längskanten (38) aufweist, die zumindest abschnittsweise, insbesondere über ihre jeweilige vollständige Länge, nicht parallel zueinander verlaufen und/oder wobei das wenigstens eine Portioniersegment (8, 8.1) zumindest einen Außenumfangskörper (8b, 8b.1) umfasst, der konisch geformt ist.

12. Portionier- und Wirkeinrichtung (1) nach einem der vorhergehenden Ansprüche, **dadurch gekennzeichnet, dass** an dem Außenumfangsbereich des Teigteilkammerträgers (2) wenigstens zwei Wandelemente (3) so befestigt sind, dass das Portioniersegment (8, 8.1) oder ein Portioniersegment (8, 8.1) der Portioniersegmente (8, 8.1) zwischen den wenigstens zwei Wandelementen (3) befestigbar ist, insbesondere wobei die Längskanten der Wandelemente (3) nicht parallel zueinander angeordnet sind, so dass das Portioniersegment (8, 8.1) in einer Verriegelungsrichtung (V) zwischen den Wandelementen (3) schiebbar ist, bis die Längskanten der Wandelemente (3) mit den korrespondierenden Längskanten des Portioniersegments (3) in Anschlag sind.

13. Portionier- und Wirkeinrichtung (1) nach einem der vorhergehenden Ansprüche, **dadurch gekennzeichnet, dass** ein Außenumfangskörper (8b, 8b.1) wenigstens eines Portioniersegments (8, 8.1) wenigstens einen Befestigungsabschnitt (8c, 8c.1) aufweist, wobei der wenigstens eine Befestigungsabschnitt (8c, 8c.1) in einer Zwischeneinbauposition und in einer Verriegelungsposition des wenigstens einen Portioniersegments (8, 8.1) auf einer Stützschulter (24) eines Segmentträgers (12) des Teigteilkammerträgers (2) aufliegt, vorzugsweise so, dass der Befestigungsabschnitt (8c, 8c.1) bei einer Bewegung des wenigstens einen Portioniersegments (8, 8.1) von der Zwischeneinbauposition in die Verriegelungsposition auf der Stützschulter (24) gleitet, wobei vorzugsweise zwischen Befestigungsabschnitt (8c, 8c.1) und Stützschulter (24) eine Gleitleiste (23) vorgesehen ist.

14. Portionier- und Wirkeinrichtung (1) nach Anspruch 13, **dadurch gekennzeichnet, dass** wenigstens ein, vorzugsweise mehrere, als Federbolzen (21) ausgebildete Befestigungselemente an dem Befestigungsabschnitt (8c, 8c.1) angeordnet sind und dass die Stützschulter (24) eine korrespondierende Anzahl, vorzugsweise schlüssellochförmiger, zweiter Aufnahmeöffnungen (22) aufweist, insbesondere wobei die Stützschulter wenigstens einen Freischnitt (37, 55) aufweist, der einer oder mehreren zweiten Aufnahmeöffnungen (22) zugeordnet ist, wobei innerhalb des Freischnitts (37, 55) wenigstens ein Kopf wenigstens eines Befestigungselements (14, 21) bewegbar ist, wenn das wenigstens eine Portioniersegment (8, 8.1) von einer Zwischeneinbauposition in eine Verriegelungsposition gebracht wird.

## Claims

1. Portioning and kneading device (1) for producing pieces of dough, having a drum-shaped dough piece chamber support (2) and at least one portioning segment (8, 8.1), at least one portioning segment (8, 8.1) being interchangeably fixable to an outer circumferential region of the drum-shaped dough piece chamber support (2), the at least one portioning segment (8, 8.1) having at least one, preferably many measuring chambers with a measuring piston (11) that can be moved to and fro therein, and it being possible for the at least one portioning segment (8, 8.1) to be brought into an intermediate installation position on the dough piece chamber support (2) and brought from the intermediate installation position into a locking position on the dough piece chamber support (2),
**characterized in that** the portioning and kneading device (1) has a drive device for the at least one portioning segment (8, 8.1), by means of which the at least one measuring piston (11) can be driven outwards and inwards in the radial direction under positive guidance, wherein, as a result of the displacement of the at least one portioning segment (8, 8.1) out of the intermediate installation position into the locking position, the at least one portioning segment (8, 8.1) is coupled to the drive device so as to be ready for operation.

2. Portioning and kneading device (1) according to Claim 1, **characterized in that** the at least one portioning segment can be brought into the intermediate installation position on the dough piece chamber support (2) by a movement in the radial direction (R) and can be displaced from the intermediate installation position into the locking position on the dough piece chamber support (2) by a movement in the axial direction (A).

3. Portioning and kneading device (1) according to one of the preceding claims, **characterized in that** the dough piece chamber carrier (2) has a cross-member (42) that can be moved by the drive device, and the at least one portioning segment (8, 8.1) has a measuring piston bar (13), to which at least one, preferably all, of the measuring pistons (11) of the at least one portioning segment (8, 8.1) is/are fixed, the measuring piston bar (13) being fixed to the cross-member (42) in the locking position and being moved together with the latter during a movement of the cross-member (42).

4. Portioning and kneading device (1) according to one of the preceding claims, **characterized in that** the at least one portioning segment (8, 8.1) has at least one locking element (51), in particular fixed to the measuring piston bar (13), having a preferably U-shaped profile, at least in some sections, which, as the at least one portioning segment (8, 8.1) is brought into the intermediate installation position, comes into engagement around a cross-member (42) of the dough piece chamber support (2).

5. Portioning and kneading device (1) according to Claim 4, **characterized in that**, at least in some sections, the locking element (51) has a funnel-like cross section, which is formed by a first lug (51a) and a second lug (51b), wherein the first and second lug (51a, 51b) are each formed as lugs bent over from a base of the locking element (51), and/or wherein the locking element (51) has locking receptacles (52), which are preferably formed in the manner of slots, and wherein, during a movement of the at least one portioning segment (8, 8.1) out of the intermediate installation position into the locking position, cross-member pins (56) arranged on the cross-member (42) are brought into engagement with the locking receptacles and fix the locking element (51) to the cross-member (42).

6. Portioning and kneading device (1) according to one of the preceding claims, **characterized in that** a kneading device (44) is provided which, in the kneading position, preferably in the 12 o'clock position, of the dough piece chamber support (2) can be arranged immediately adjacent to the mounted portioning segment (8, 8.1) or to one of the mounted portioning segments (8, 8.1), wherein, in the kneading position, the measuring piston or pistons (11) is/are positioned such that the piece or pieces of dough located in the measuring chamber or chambers is/are positioned such that they can be kneaded by the kneading device (44).

7. Portioning and kneading device (1) according to one of the preceding claims, **characterized in that** fixing elements (14, 22) are arranged and formed on the dough piece chamber support (2) and the at least one portioning segment (8, 8.1) such that fixing elements (14, 22) arranged on the at least one portioning segment (8, 8.1) can interact with fixing elements (14, 22) arranged on the dough piece chamber support (2), so that the at least one portioning segment (8, 8.1) can be positioned on the dough piece chamber support (2) in the intermediate installation position and can be displaced out of the intermediate installation position into the locking position.

8. Portioning and kneading device (1) according to one of the preceding claims, **characterized in that** the dough piece chamber support (2) comprises at least one fixing element formed as a spring-loaded pressure piece (54), which is positioned such that it can exert a compressive force substantially perpendicular to the axial direction (A), and wherein the at least one positioning segment (8, 8.1) comprises at least one fixing shoulder (50), which is arranged on the at least one portioning segment (8, 8.1) such that, in the intermediate installation position of the at least one portioning segment (8, 8.1), the fixing shoulder (50) can be positioned in relation to the spring-loaded pressure piece (54) such that no compressive force from the spring-loaded pressure piece (54) is transmitted to the fixing shoulder (50), and/or wherein, during the movement out of the intermediate installation position into the locking position, a compressive force is transmitted from the spring-loaded pressure piece (54) to the fixing shoulder (50), and/or wherein, in the locking position of the at least one portioning segment (8, 8.1), the fixing shoulder (50) is positioned in relation to the spring-loaded pressure piece (54) such that a compressive force is transmitted from the spring-loaded pressure piece (54) to the fixing shoulder (50).

9. Portioning and kneading device (1) according to Claim 8, **characterized in that** the fixing shoulder (50) is spaced apart from the fixing section (8c.1) and with the latter forms a cut-out (55), in which the spring-loaded pressure piece (54) is accommodated when the at least one portioning segment (8, 8.1) is in a locking position.

10. Positioning and kneading device (1) according to one of the preceding claims, **characterized in that** at least one locking device (10) is provided, by means of which the at least one portioning segment (8, 8.1) is locked to the dough piece chamber support (2) in the locking position, in particular such that base (8a, 8a.1) and outer circumferential body (8b, 8b.1) are immovably fixed to the dough piece chamber support, and the measuring pistons (11) can be moved to and fro, at least in the radial direction R.

11. Portioning and kneading device (1) according to one of the preceding claims, **characterized in that** the at least one portioning segment (8, 8.1) has at least two longitudinal edges (38) which, at least in some sections, in particular over their respective complete length, do not extend parallel to each other, and/or wherein the at least one portioning segment (8, 8.1) comprises at least one outer circumferential body (8b, 8b.1) which is conical.

12. Portioning and kneading device (1) according to one of the preceding claims, **characterized in that** at least two wall elements (3) are fixed to the outer circumferential region of the dough piece chamber support (2) such that the portioning segment (8, 8.1) or a portioning segment (8, 8.1) of the portioning segments (8, 8.1) can be fixed between the at least two wall elements (3), in particular wherein the longitudinal edges of the wall elements (3) are not arranged parallel to each other, so that the portioning segment (8, 8.1) can be pushed in a locking direction (V) between the wall elements (3) until the longitudinal edges of the wall elements (3) are in contact with corresponding longitudinal edges of the portioning segment (3).

13. Portioning and kneading device (1) according to one of the preceding claims, **characterized in that** an outer circumferential body (8b, 8b.1) of at least one portioning segment (8, 8.1) has at least one fixing section (8c, 8c.1), wherein, in an intermediate installation position and in a locking position of the at least one portioning segment (8, 8.1), the at least one fixing section (8c, 8c.1) rests on a supporting shoulder (24) of a segment support (12) of the dough piece chamber support (2), preferably such that, during a movement of the at least one portioning segment (8, 8.1) from the intermediate installation position into the locking position, the fixing section (8c, 8c.1) slides on the supporting shoulder (24), a slide rail (23) preferably being provided between fixing section (8c, 8c.1) and supporting shoulder (24).

14. Positioning and kneading device (1) according to Claim 13, **characterized in that** at least one, preferably many, fixing elements formed as spring pins (21) are arranged on the fixing section (8c, 8c.1), and **in that** the supporting shoulder (24) has a corresponding number of preferably keyhole- shaped, second receiving openings (22), in particular wherein the supporting shoulder has at least one clearance cut (37, 55), which is assigned to one or more second receiving openings (22), wherein at least one head of at least one fixing element (14, 21) can be moved within the clearance cut (37, 55) when the at least one portioning segment (8, 8.1) is brought from an intermediate installation position into a locking position.

## Revendications

1. Dispositif (1) pour la fabrication de portions de pâte par découpe en portions et action sur les portions, présentant
un support (2) de chambre à portions de pâte, en forme de tambour, au moins un segment (8, 8.1) de découpe en portions, le ou les segments (8, 8.1) de découpe en portions pouvant être fixé de manière remplaçable au niveau de la périphérie extérieure du support (2) de chambre à portions de pâte en forme de tambour,
le ou les segments (8, 8.1) de découpe en portions présentant au moins une et de préférence plusieurs chambres de mesure dans lesquelles un piston de mesure (11) est disposé à déplacement en va-et-vient,
le ou les segments (8, 8.1) de découpe en portions pouvant être amenés dans une position intermédiaire sur le support (2) de chambres à portions de pâte et hors de la position intermédiaire jusque dans une position de verrouillage sur le support (2) de chambres à portions de pâte,
**caractérisé en ce que**
le dispositif (1) de découpe en portions et d'action présente pour le ou les segments (8, 8.1) de découpe en portions un dispositif d'entraînement qui permet de déplacer de manière contrôlée un piston de mesure (11) radialement vers l'extérieur et l'intérieur, le ou les segments (8, 8.1) de découpe en portions étant accouplés sur le dispositif d'entraînement de manière à être prêts à fonctionner, par le déplacement du ou des segments (8, 8.1) de découpe en portions depuis la position intermédiaire jusque dans la position de verrouillage.

2. Dispositif (1) de découpe en portions et d'action sur les portions selon la revendication 1, **caractérisé en ce que** le ou les segments de découpe en portions peuvent être amenés par un déplacement dans la direction radiale (R) jusque dans la position intermédiaire sur le support (2) de chambres à portions de pâte et peut être déplacé hors de la position intermédiaire par un déplacement dans la direction axiale (A) jusque dans la position de verrouillage sur le support (2) de chambres à portions de pâte.

3. Dispositif (1) de découpe en portions et d'action sur les portions selon l'une des revendications précédentes, **caractérisé en ce que** le support (2) de chambres à portions de pâte présente une traverse (42) apte à être déplacée par le dispositif d'entraînement et **en ce que** les segments (8, 8.1) de découpe en portions présentent une latte (13) de piston de mesure sur laquelle sont fixés au moins un et de préférence tous les pistons (11) du ou des segments (8, 8.1) de découpe en portions, la latte (13) de piston de mesure étant fixée en position de verrouillage sur la traverse (42) et étant déplacée conjointement avec cette dernière lors d'un déplacement de la traverse (42).

4. Dispositif (1) de découpe en portions et d'action sur les portions selon l'une des revendications précédentes, **caractérisé en ce que** le ou les segments (8, 8.1) de découpe en portions présentent au moins un élément de blocage (51) fixé notamment sur la latte (13) du piston de mesure et présentant de préférence un profil en forme de U qui chevauche une traverse (42) du support (2) de chambres à portions de pâte lorsque le ou les segments (8, 8.1) de découpe en portions sont amenés dans la position intermédiaire.

5. Dispositif (1) de découpe en portions et d'action sur les portions selon la revendication 4, **caractérisé en ce qu'**au moins certaines parties de l'élément de blocage (51) présentent une section transversale en forme d'entonnoir formée d'une première patte (51a) et d'une deuxième patte (51b), la première et la deuxième patte (51a, 51b) étant toutes deux configurées comme pattes repliées par rapport au corps de base de l'élément de blocage (51) et/ou dans lequel l'élément de blocage (51) présente des logements de blocage (52) qui sont de préférence configurés en forme de trous oblongs, des goujons de traverse (56) disposés sur la traverse (42) venant s'engager dans les logements de blocage et immobilisant l'élément de blocage (51) sur la traverse (42) lors d'un déplacement du ou des segments (8, 8.1) de découpe en portions depuis la position intermédiaire jusque dans la position de verrouillage.

6. Dispositif (1) de découpe en portions et d'action sur les portions selon l'une des revendications précédentes, **caractérisé en ce qu'**est prévu un dispositif d'action (44) qui, lorsque le support (2) de chambres à portions de pâte est en position d'action, de préférence une position à douze heures, peut être disposé au voisinage direct du segment (8, 8.1) de découpe en portions qui a été monté ou d'un des segments (8, 8.1) de découpe en portions qui ont été montés, le ou les pistons de mesure (11) étant positionnés en position d'action de telle sorte que les ébauches de pâte situées dans la ou les chambres de mesure soient disposées de telle sorte que le dispositif d'action (44) puisse agir sur elles.

7. Dispositif (1) de découpe en portions et d'action sur les portions selon l'une des revendications précédentes, **caractérisé en ce que** des éléments de fixation (14, 22) sont disposés sur le support (2) de chambres à portions de pâte et le ou les segments (8, 8.1) de découpe en portions et sont configurés de telle sorte que des éléments de fixation (14, 22) disposés sur le ou les segments (8, 8.1) de découpe en portions puissent coopérer avec des éléments de fixation (14, 22) disposés sur le support (2) de chambres à portions de pâte de telle sorte que le ou les segments (8, 8.1) de découpe en portions puissent être placés sur le support (2) de chambres à portions de pâte dans la position intermédiaire et être déplacés hors de la position intermédiaire jusque dans la position de verrouillage.

8. Dispositif (1) de découpe en portions et d'action sur les portions selon l'une des revendications précédentes, **caractérisé en ce que** le support (2) de chambres à portions de pâte comporte au moins un élément de fixation configuré comme pièce (54) de poussée élastique conditionnée de manière à pouvoir exercer une force de poussée essentiellement perpendiculaire à la direction axiale (A), le ou les segments (8, 8.1) de découpe en portions comportant au moins un épaulement de fixation (50) qui est disposé sur le ou les segments (8, 8.1) de découpe en portions de telle sorte que lorsque le ou les segments (8, 8.1) de découpe en portions sont en position intermédiaire, les épaulements de fixation (50) soient positionnés par rapport à la pièce (54) de poussée élastique de telle sorte qu'aucune force de poussée ne soit transférée depuis la pièce (54) de poussée élastique sur les épaulements de fixation (50), et/ou lors d'un déplacement hors de la position intermédiaire jusque dans la position de verrouillage, une force de poussée étant transférée par la pièce (54) de poussée élastique sur les épaulements de fixation (50) et/ou les épaulements de fixation (50) étant positionnés dans la position de verrouillage du ou des segments (8, 8.1) de découpe en portions par rapport à la pièce (54) de poussée élastique de telle sorte qu'une force de poussée soit exercée par la pièce (54) de poussée élastique sur l'épaulement de fixation (50).

9. Dispositif (1) de découpe en portions et d'action sur les portions selon la revendication 8, **caractérisé en ce que** les épaulements de fixation (50) sont maintenus à distance de la partie de fixation (8c.1) et forment avec cette dernière une découpe (55) dans laquelle la pièce (54) de poussée élastique est reçue lorsque le ou les segments (8, 8.1) de découpe en portions se trouvent dans une position de verrouillage.

10. Dispositif (1) de découpe en portions et d'action sur les portions selon l'une des revendications précédentes, **caractérisé en ce qu'**un ou plusieurs dispositifs de verrouillage (10) par lesquels le segment (8, 8.1) de découpe en portions est verrouillé en position de verrouillage sur le support (2) de chambres à portions de pâte sont prévus, **en ce que** le corps de base (8a, 8a.1) et le corps périphérique extérieur (8b, 8b.1) sont immobilisés sur le support de chambres à portions de pâte les pistons de mesure (11) puissent être déplacés en va-et-vient au moins dans la direction radiale R.

11. Dispositif (1) de découpe en portions et d'action sur les portions selon l'une des revendications précédentes, **caractérisé en ce que** le ou les segments (8, 8.1) de découpe en portions présentent au moins deux bords longitudinaux (38) sur certaines parties et en particulier toute leur longueur ne s'étendent pas parallèlement l'une à l'autre, et/ou le ou les segments (8, 8.1) de découpe en portions comportant au moins un corps périphérique extérieur (8b, 8b.1) de forme conique.

12. Dispositif (1) de découpe en portions et d'action sur les portions selon l'une des revendications précédentes, **caractérisé en ce qu'**au moins deux éléments de paroi (3) sont fixés sur la partie périphérique extérieure du support (2) de chambres à portions de pâte de telle sorte que le segment (8, 8.1) de découpe en portions ou l'un (8, 8.1) des segments (8, 8.1) de découpe en portions puisse être fixé entre les deux ou plusieurs éléments de paroi (3), et en particulier dans lequel les bords longitudinaux des éléments de paroi (3) ne sont pas disposés parallèlement l'un à l'autre de telle sorte que le segment (8, 8.1) de découpe en portions puisse être déplacé dans une direction de verrouillage (V) entre les éléments de paroi (3) jusqu'à ce que les bords longitudinaux des éléments de paroi (3) viennent buter contre les bords longitudinaux correspondants du segment (3) de découpe en portions.

13. Dispositif (1) de découpe en portions et d'action sur les portions selon l'une des revendications précédentes, **caractérisé en ce qu'**un corps périphérique extérieur (8b, 8b.1) d'au moins un segment (8, 8.1) de découpe en portions présente au moins une partie de fixation (8c, 8c.1), la ou les parties de fixation (8c, 8c.1) reposant dans une position intermédiaire et dans une position de verrouillage du ou des segments (8, 8.1) de découpe en portions sur un épaulement de soutien (24) d'un porte-segment (12) du support (2) de chambres de portions de pâte, de préférence de telle sorte que la section de fixation (8c, 8c.1), lors d'un déplacement du ou des segments (8, 8.1) de découpe en portions depuis la position intermédiaire jusque dans la position de verrouillage glisse sur l'épaulement de soutien (24), une languette de glissement (23) étant de préférence prévue entre la section de fixation (8c, 8c.1) et l'épaulement de soutien (24).

14. Dispositif (1) de découpe en portions et d'action sur les portions selon la revendication 13, **caractérisé en ce qu'**au moins un et de préférence plusieurs éléments de fixation configurés comme goujons élastiques (21) sont disposés sur la section de fixation (8c, 8c.1) et **en ce que** les épaulements de soutien (24) présentent un nombre correspondant de deuxièmes ouvertures de réception (22), de préférence en forme de trou de serrure, les épaulements de soutien présentant au moins une découpe libre (37, 55) associée à une ou plusieurs deuxièmes ouvertures de réception (22), au moins une tête d'au moins un élément de fixation (14, 21) pouvant être déplacée à l'intérieur de la découpe libre (37, 55) lorsque le ou les segments (8, 8.1) de découpe en portions sont amenés d'une position intermédiaire jusque dans une position de verrouillage.
